# EUROPÄISCHE PATENTANMELDUNG

(11) **EP 0 854 607 A1**
(43) Veröffentlichungstag der Anmeldung: **22.07.1998**
(21) Anmeldenummer: 98100787.5
(22) Anmeldetag: 19.01.1998
(51) Int. Cl.: H04L 12/24, H04Q 3/00

(54) **Verfahren zum Planen und Konfigurieren eines Kommunikationsnetzwerkes**

(30) Priorität: 20.01.1997 CH 99/97
(71) Anmelder: Siemens Schweiz AG, 8047 Zürich (CH)
(72) Erfinder: Lehmann, André, 8046 Zürich (CH); Otto, Matthias, 8633 Wolfhausen (CH)

(57) **Zusammenfassung**

Das Verfahren dient zum Planen und Konfigurieren eines aus Netzwerkelementen (NE1, NE2, ..., NEk) bestehenden Kommunikationsnetzwerkes (N), wobei die Netzwerkelemente (NE1, NE2, ..., NEk) über eine Schnittstelle (QS) einstellbar sind. In einer Datenbank (MIB) werden für verschiedene Betriebszeitpunkte geplante Plan-Konfigurationen (PLAN) des Netzwerkes (N) gespeichert, mit denen die Betriebsparameter der Netzwerkelemente (NE1, NE2, ..., NEk) entsprechend der Planung einstellbar sind. Dabei werden für jede Plan-Konfiguration die Netzwerkelemente (NE1, NE2, ..., NEk) als Objekte mit den einzustellenden Betriebsparametern in einem Objektbaum erfasst und dessen Daten im gewünschten Betriebszeitpunkt aus der Datenbank (MIB) abgerufen und über die Schnittstelle (QS) dem Kommunikationsnetzwerk (N) zugeführt. So wird für diesen Betriebszeitpunkt im Kommunikationsnetzwerk (N) eine Konfiguration eingestellt, die der gewünschten Soll-Konfiguration (SOLL) entspricht. Für künftige Einsätze geplante Soll-Konfiguration werden gebildet, indem der aktuellen Soll-Konfiguration (SOLL) eine oder mehrere Plan-Konfigurationen, die die vorgesehenen Konfigurationsänderungen enthalten, überlagert werden. Zur vorgängigen Überprüfung von geplanten Konfigurationen wird das Ergebnis der Überlagerung sichtbar gemacht.

## Beschreibung

Die vorliegende Erfindung betrifft ein Verfahren nach dem Oberbegriff des Patentanspruchs 1.

In modernen Kommunikationsnetzwerken, wie Fernmeldenetzen, gewinnen Funktionen für Betrieb und Wartung (Operation, Administration and Maintenance OAM) immer mehr an Bedeutung. Wie in P. Bocker 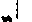 Das diensteintegrierende digitale Nachrichtennetz" Berlin 1990, Seite 158 ff. beschrieben, befasst sich die CCITT-Empf. Q542 für OAM u.a. mit Bedien- und Verwaltungsaufgaben im Zusammenhang mit dem Neueinrichten, Ändern oder Erweitern von Daten eines Kommunikationsnetzwerkes. Konkret stellt sich den Betreibern solcher Netze immer häufiger die Aufgabe, ihr Netz rasch sich ändernden Bedürfnissen anzupassen. Solche Anpassungen betreffen z.B. das Bereitstellen zusätzlicher Leitungen oder das Entfernen von Leitungen in bestimmten Leitungsbündeln bei voraussehbaren Änderungen im Verkehrsaufkommen, oder die Änderung der Priorisierung von Leitungen im Netz. Dabei ist für den Betreiber von besonderer Bedeutung, Planungen für verschiedene Netzkonfigurationen im voraus erstellen und prüfen zu können, damit er allfällige sich ungünstig auf den Betrieb des Netzes auswirkende Fehlplanungen rechtzeitig vor der Implementierung im Netz feststellen und korrigieren kann. Ferner müssen die verschiedenen Netzplanungen so verwaltet werden, dass sie bei Bedarf rasch abrufbar sind und in das Netz implementiert werden können.

Der vorliegenden Erfindung liegt daher die Aufgabe zugrunde, ein Verfahren anzugeben, das in einfacher Weise erlaubt, verschiedene Planungen für die Konfiguration (Einstellen) eInes Kommunikationsnetzwerkes bereit zu stellen und zu verwalten und das Netzwerk in einem beliebigen Zeitpunkt entsprechend einer bestimmten Planung zu konfigurieren.

Diese Aufgabe wird durch die im kennzeichnenden Teil des Patentanspruchs 1 angegebenen Massnahmen gelöst. Vorteilhafte Ausgestaltungen der Erfindung sind in weiteren Ansprüchen angegeben.

Das erfindungsgemässe Verfahren bietet folgende Vorteile:
- Künftige Konfigurationen eines Netzes können im voraus mit verschiedenen Planungen erstellt und auf ihre Eignung für bestimmte Netzverhältnisse und Verkehrsaufkommen überprüft werden.
- Die Planungen können unabhängig von der Struktur des Netzwerkes erstellt werden.

Die Erfindung wird nachfolgend anhand einer Zeichnung beispielsweise näher erläutert. Dabei zeigt :
- Fig. 1: eine prinzipielle Anordnung zur Durchführung des Verfahrens
- Fig. 2 und 3: konkrete Anwendungen des Verfahrens

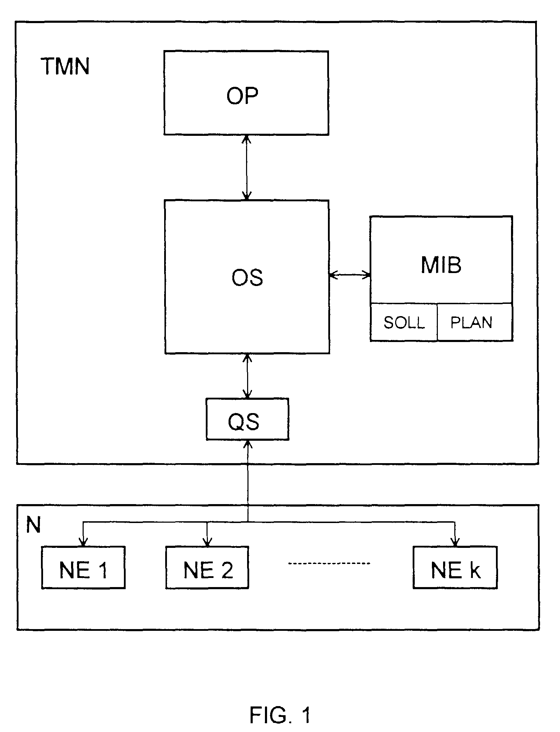

Fig. 1 zeigt eine Anordnung, in der die Erfindung angewendet werden kann. Die Anordnung enthält einen Bedienteil OP, der mit einem Betriebssystem OS verbunden ist, welches mit einer Datenbank MIB (Managed Information Base) in Verbindung steht und auf diese zugreifen kann. Über eine Schnittstelle QS ist das Betriebssystem OS mit Netzwerkelementen NE1, NE2, ........ NEk eines Kommunikationsnetzwerkes N verbunden. Netzwerkelemente NE sind einstellbare physikalische Teile und Elemente eines Kommunikationsnetzwerkes N etc. Solche Elemente können sowohl Hardware-Elemente (wie Teilnetze, Knoten/Vermittlungsstellen, Leitungsbündel oder einzelne Leitungen zwischen den Knoten, Baugruppen, Schnittstellen, Leitungen etc.) als auch Softwareelemente (z.B. geschaltete Verbindungen) sein. Der Bedienteil OP, das Betriebssystem OS, die Datenbank MIB und die Schnittstelle QS bilden zusammen ein sogenanntes Telecommunication Management Network TMN, das für die Steuerung und Einstellung der Elemente NE1, NE2, ........ NEk verantwortlich ist. Die Kommunikation zwischen den erwähnten Teilen des TMN erfolgt gemäss CCITT-Empfehlung X.710 bis X.712. Insbesondere ist das Betriebssystem OS für die Verwaltung, Überwachung und Konfiguration der Elemente NE zuständig. Unter Konfiguration soll hier das Einstellen bestimmter Betriebszustände von Elementen NE verstanden werden. Dabei werden die Betriebsparameter der Elemente nach Bedarf verändert. Solche Änderungen können beispielsweise bei einem vorübergehend erhöhten Verkehrsaufkommen im Netzwerk N notwendig werden, indem für diese Zeit mehr Leitungen zwischen bestimmten Knoten im Netzwerk N eingeschaltet werden müssen. Ferner können Änderungen des Signalisierverfahrens oder die Umleitung des Verkehrs von einem Leitungsbündel auf ein anderes zwischen zwei Knoten eines Netzes erforderlich werden. Konfigurationsänderungen können vom Netzbetreiber über den Bedienteil OP eingegeben werden. Das Betriebssystem OS sorgt dann dafür, dass das Netzwerk N entsprechend konfiguriert wird. Als weitere Aufgabe des Betriebssystems OS kann vorgesehen werden, geeignete Massnahmen in einem Element NE einzuleiten, wenn das Betriebssystem OS von diesem eine Fehlermeldung erhält. Die Schnittstelle QS ist eine normierte Schnittstelle (z.B Q3-Adapter gemäss CCITT. Rec. M.3010), die die zwischen dem Betriebssystem OS und den Elementen NE1, NE2, ........ NEk ausgetauschten Meldungen und Daten erforderlichenfalls konvertiert. Als Bedienteil OP kann ein Personalcomputer oder eine Workstation vorgesehen werden, über die die Befehle für das Betriebssystem OS eingegeben werden. Eine Bildschirmanzeige ermöglicht dem Betreiber interaktiv mit dem Betriebssystem OS zu kommunizieren.

Für jedes vorn Management Network TMN verwaltete Element NE des Kommunikationsnetzwerkes N ist in der Datenbank MIB ein Objekt (Managed Object gemäss CCITT-Rec. M.3010) vorhanden. Jedes Objekt enthält die Eigenschaften und Zustände des von ihm repräsentierten Elementes. Auch jede Funktion, die das Kommunikationsnetzwerk N ausführen kann, wird in einem Objekt erfasst. Dabei kann ein Objekt ein oder mehrere Elemente oder Funktionen repräsentieren. Umgekehrt kann ein Element oder eine Funktion auch durch mehrere Objekte repräsentiert werden.

Alle in der Datenbank MIB enthaltenen Objekte stellen zusammen ein Informationsmodell (z.B. gemäss Guidelines for the Definition of Managed Objects in Abstract Syntax Notation One ASN.1) des zu steuernden Kommunikationsnetzwerkes N dar. Jede Erzeugung und jede Löschung eines Elementes des Netzwerkes N wird im Modell nachgeführt. Mit der Definition des Modells wird festgelegt, was der Betreiber des Kommunikationsnetzwerkes N über das Betriebssystem OS im Netzwerk N steuern kann. Die Kommunikation des Betriebssysterns OS mit dem Bedienteil OP, der Datenbank MIB und der Schnittstelle QS erfolgt mittels definierter Meldungen (Indications, Notifications, Confirmations etc.). Das Betriebssystem OS kann über definierte Kommandos (z.B. CMISE-Kommandos gemäss CCITT Rec. X.700ff, insbesondere X.711) lesend und schreibend auf die Objekte in der Datenbank MIB zugreifen.

In der Datenbank MIB sind die Soll-Konfiguration SOLL des Netzwerkes N sowie eine oder mehrere für verschiedene Betriebszeitpunkte geplante Plan-Konfigurationen PLAN des Netzwerkes N abgespeichert. Sowohl der Soll- als auch den Plan-Konfigurationen liegt das erwähnte Informationsmodell zugrunde. Die Soll-Konfiguration entspricht dem Zustand, dem das Netzwerk N im aktuellen Betriebszeitpunkt gemäss den Vorgaben des Betreibers tatsächlich entsprechen muss.

Die in der Datenbank MIB gespeicherten Plan-Konfigurationen enthalten vom Betreiber des Netzwerkes N über den Bedienteil OP für einen bestimmten Betriebszeitpunkt eingegebene Konfigurationsänderungen. Sie können vom Betreiber abgerufen und zur Erzeugung von neuen (künftigen) Soll-Konfigurationen verwendet werden, welche später in einem gewünschten Zeitpunkt im Netzwerk N implementiert werden können. Dabei entsteht - wie weiter unten noch beschrieben ist - eine neue Soll-Konfiguration durch Überlagerung einer bestehenden (älteren) Soll-Konfiguration mit einer oder mehreren Plan-Konfigurationen. Eine derart erzeugte neue Soll-Konfiguration kann dann vor der Implementierung in das Netzwerk N dem Betreiber z.B. über einen Bildschirm sichtbar gemacht werden. Dies ermöglicht dem Betreiber, beliebige Planungsversuche durchzuführen. Ferner kann er Fehlplanungen rechtzeitig vor der Implementierung feststellen und zu korrigieren.

Nach der erfolgreichen Implementierung einer Plan-Konfiguration im Netzwerk N wird diese Plan-Konfiguration in die Datenbank MIB überführt. Dabei wird die in der Datenbank MIB enthaltene Soll-Konfiguration entsprechend aktualisiert, indem die Daten der Plan-Konfiguration in die Soll-Konfiguration geschrieben werden. Damit entspricht die Soll-Konfiguration in der Datenbank MIB dem tatsächlichen Zustand der Netzwerkelemente im Netzwerk N.

Es kann auch vorgesehen werden, dass die Soll-Konfiguration in der Datenbank MIB selbsttätig durch Auswertung von laufend aus dem Kommunikationsnetzwerk N eintreffenden Änderungs-Meldungen (Notification) vorn Betriebssystem OS aktualisiert wird. Ferner kann vorgesehen werden, dass der Betreiber über den Bedienteil OP eine Abgleichprozedur auslöst, aufgrund der das Betriebssystem OS alle oder nur einen Teil der relevanten Daten in den Netzwerkelementen NE1, NE2, ... NEk abfrägt und mit den Soll-Daten in der Datenbank MIB vergleicht und die Soll-Konfiguration in der Datenbank MIB soweit erforderlich aktualisiert.

Wie erwähnt, entspricht die in der Datenbank MIB eingetragene Soll-Konfiguration immer dem aktuellen Zustand der Elemente NE des zu steuernden Kommunikationsnetzwerkes N. Vom Betreiber über den Bedienteil OP angeregte Änderungen der Objekt-Attribute, d.h. veränderbare Daten wie z.B. die Anzahl Leitungen in einem Leitungsbündel, werden vom Betriebssystem OS über die Schnittstelle QS an das Kommunikationsnetzwerk N übertragen, wo dann eine entsprechende Konfigurationsänderung vorgenommen wird. Auch hierzu werden CMISE-Kommandos verwendet. Dabei kann vorgesehen werden, dass alle Operationen, die der Bediener am Bedienteil OP eingibt, zunächst vom Betriebessystem OS im Informationsmodell auf Zulässigkeit geprüft und vom Betriebssystem OS nur dann an das Netzwerk N weitergegeben werden, wenn die Operation gültig ist.

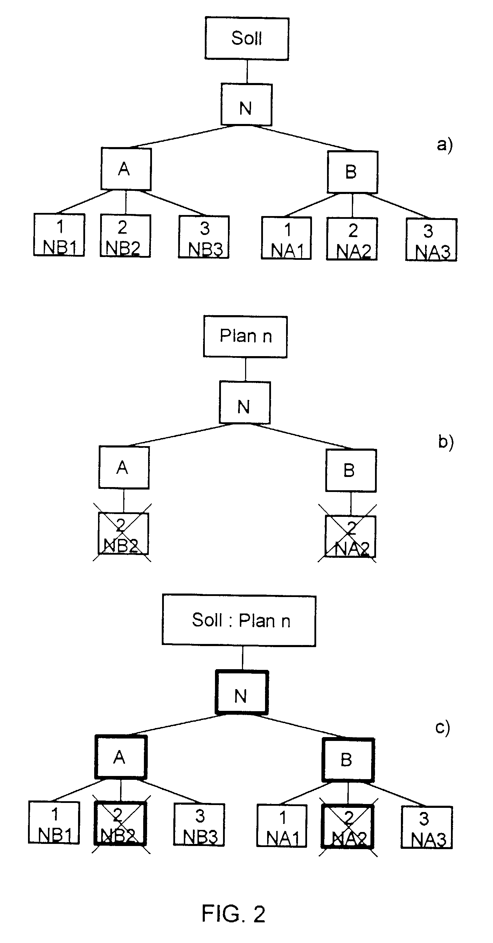

Anhand von Fig. 2 wird nachfolgend ein konkretes Anwendungsbeispiel der Erfindung beschrieben. Dabei wird angenommen, zwei Knoten (Vermittlungsstellen) A und B eines Kommunikationsnetzwerkes N seien momentan durch drei Verbindungsleitungen miteinander verbunden. Diese aktuelle Konfiguration des Netzwerkes N soll nun geändert werden. Dabei wird die Anzahl Verbindungsleitungen zwischen den Knoten A und B von drei auf zwei reduziert, indem die Leitung 2 ausgeschaltet wird.

In Fig. 2a ist die aktuelle Soll-Konfiguration 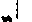 Soll" des Netzwerkes N als Ausgangszustand mit zwei Knoten und mit drei Verbindungsleitungen in einem Objektbaum dargestellt. Im Baum enthalten die Knoten A und B je drei Leitungen 1,2 und 3, die mit ihren Endpunkten im jeweils anderen Knoten gekennzeichnet sind, d.h. auf den zugehörigen Leitungsendpunkt im anderen Knoten referenzieren. Für den Knoten A sind dies die Leitungsendpunkte NB1, NB2 und NB3, für den Knoten B die Endpunkte NA1, NA2 und NA3.

In Fig. 2b ist der Objektbaum einer für einen bestimmten Einsatzzeitpunkt geplanten Konfigurationsänderung (Plan-Konfiguration 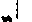 Plan n") des Netzwerkes N mit nur noch zwei Verbindungsleitungen zwischen den Knoten A und B gezeigt. Die Plan-Konfiguration baut auf der gleichen Objektbaum-Struktur auf wie die Soll-Konfiguration in Fig.2a auf. Gemäss Plan-Konfiguration 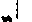 Plan n" weist der Baum die unveränderten Objekte Netzwerk N, Knoten A und B sowie die zu löschenden Objekte NA2 (Endpunkt der Leitung 2 im Knoten A) und NB2 (Endpunkt der Leitung 2 im Knoten B) auf. Die zu löschenden Objekte NA2 und NB2, welche die zu eliminierende Leitung 2 repräsentieren, sind in Fig. 2b mit 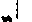 x" gekennzeichnet. Im gewünschten Zeitpunkt können die Daten der Plan-Konfiguration 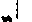 Plan n" mit dem CMISE-Kommando 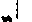 Action Download" über das Bedienteil OP vom Betriebssystem OS in das Netzwerk N überführt (implementiert) werden, worauf dort die Einstellungen der betreffenden Netzwerkelemente NE entsprechend geändert werden. Nachher wird in der Datenbank MIB die Soll-Konfiguration von Fig. 2a mit den Daten der Plan-Konfiguration von Fig. 2b überschrieben. Daraus resultiert neue Soll-Konfiguration gemäss Fig. 2c, in der gemäss Planung die Leitung 2 zwischen den Knoten A und B als nicht mehr existiert, entspricht dann dem neuen aktuellen Zustand des Netzwerkes N. Die verwendete Plan-Konfiguration 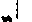 Plan n" kann in der Datenbank MIB aufbewahrt und für eine spätere Planung zur Verfügung gehalten werden. Die neue Soll-Konfiguration 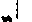 Soll" bleibt im Netzwerk N wirksam, bis sie durch Implementierung einer neuen Plan-Konfiguration verändert wird.

Für den Betreiber eines Kommunikationsnetzwerkes kann es nun sehr nützlich und im Hinblick auf künftige Anforderungen an das Netzwerk hilfreich sein, wenn er vorsorglich verschiedene Planungen durchführen und testen kann, bevor er deren Ergebnis in das Netzwerk implementiert. So kann er insbesondere auch allfällige Fehlplanungen feststellen und rechtzeitig korrigieren, bevor sie sich im Netzwerk ungünstig auswirken. Hierzu wird vorgesehen, aus der Planung resultierende neue geplante Soll-Konfigurationen dem Betreiber des Netzwerkes N sichtbar zu machen und beispielsweise auf einem Bildschirm darzustellen. Im folgenden wird eine solche neue vorerst nur geplante Soll-Konfiguration im Gegensatz zu einer tatsächlich im Netzwerk N bereits implementierten Soll-Konfiguration 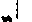 Soll" als 'geplante Soll-Konfiguration 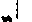 Soll:Plan n"' bezeichnet. Eine geplante Konfiguration 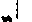 Soll:Plan n" ist also eine aus einer bestimmten Planung resultierende, jedoch noch nicht im Netzwerk N implementierte neue Soll-Konfiguration. Eine geplante Soll-Konfiguration 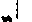 Soll:Plan n" wird erzeugt, indem eine Plan-Konfiguration 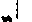 Plan n" in nachfolgend beschriebener Weise der aktuellen Soll-Konfiguration 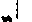 Soll" überlagert wird.

Die Namensgebung (Naming) der einzelnen Objekte im genannten Informationsmodell erfolgt gemäss CCITT-Rec. X.720 (insbesondere Kap. 6 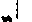 Principles of containement and naming"). Die zur vollständigen Identifikation eines Objektes erforderliche Adresse besteht aus einem Distinguished Name (DN), der aus einer Sequenz von Relative Distinguished Names (RDN) aufgebaut ist. So kann der DN für die Leitung 2 im Knoten A des Netzwerkes N mit der Sequenz
[ [Netzwerk-Identifikation:N] [Knoten-Identifikation:A] [Leitungs-Identifikation:2] ]
dargestellt werden. Der Einfachheit halber wird im folgenden eine Schreibweise verwendet, in der die in den massgebenden CCITT-Rec. vorgesehene Attribut-Identifikation der einzelnen RDN weggelassen ist. Der DN für die Leitung 2 lautet dann vereinfacht
[ [N] [A] [2] ].
Der DN für die Leitung 2 besteht also aus den drei RDN [N], [A] und [2], wobei N der Wert des Attributs 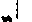 Netzwerk" (z.B. ein Teilnetz innerhalb eines Kommunikationsnetzes), A der Wert des Attributs 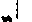 Knoten" (Knoten A im Teilnetz) und 2 der Wert des Attributs 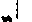 Leitung" (am Knoten A angeschlossene Leitung 2) ist. Selbstverständlich kann dieser DN mit weiteren RDN ergänzt werden, wenn dies zur eindeutigen Adressierung bzw. Identifizierung der Leitung 2 in einem umfangreichen Kommunikationsnetzwerk erforderlich ist.

Im Rahmen der vorliegenden Erfindung wird nun im DN eines jeden Objektes ein weiterer RDN eingeführt, der zur Identifikation, d.h. zur Unterscheidung der Konfigurationsart (Soll-oder Plan-Konfiguration) dient und dessen Attributwert zur Erzeugung einer geplanten Soll-Konfiguration speziell verwendet wird. Dabei wird im Naming für ein Objekt in der Soll-Konfiguration ein RDN mit dem Attributwert 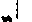 Soll", im Naming für ein Objekt einer Plan-Konfiguration ein RDN mit dem Attributwert 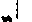 Plan n" und im Naming der aus einer Planung hervorgehenden geplanten Soll-Konfiguration ein RDN mit dem Attributwert 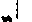 Soll:Plan n" eingeführt. Darin ist 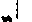 n" eine Nummer zur Unterscheidung von verschiedenen für bestimmte Betriebszeitpunkte des Netzwerkes N vorgesehenen Planungen. Für die Adressierung der Leitung 2 im Knoten A des Netzwerkes N ergibt sich dann in der Soll-Konfiguration der DN
[ [Soll] [N] [A] [2] ]
und in der Plan-Konfiguration der DN
[ [Plan n] [N] [A] [2] ].
Die verschiedenen Attribut-Werte 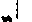 Soll" und 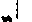 Plan" im ersten RDN des DN eines Objektes legen somit fest, ob das angesprochene Objekt zu einer Soll- oder einer Plan-Konfiguration gehört.

Die spezielle Adressierung wird nun auf die Objekte von Fig. 2 angewendet. Die in Fig. 2a dargestellte Soll-Konfiguration 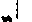 Soll" enthält im zugehörigen Objektbaum 9 Objekte mit folgenden Adressen:

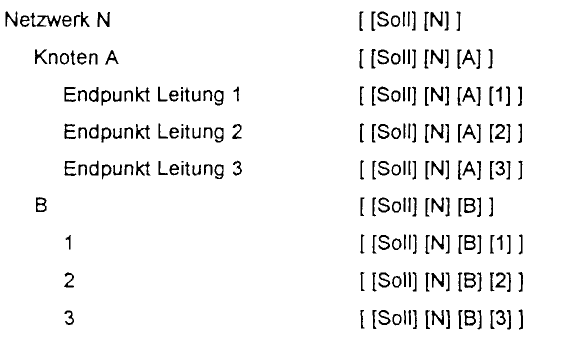

Die in Fig. 2b dargestellte Plan-Konfiguration 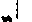 Plan n" enthält im zugehörigen Objektbaum 5 Objekte, deren Naming analog wie oben wie folgt gewählt wird:

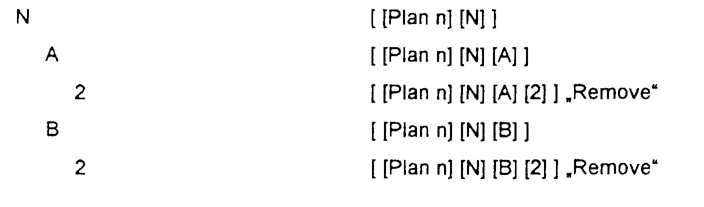

Die zwei die Endpunkte der Leitung 2 repräsentierenden Objekte, die gemäss Planung zu eliminieren ist, enthalten zusätzlich ein Attribut 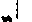 Intention" mit dem Wert 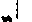 Remove", welches die Elimination der Leitung 2 bewirkt. Als weitere Werte des Attributes 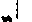 Intention" können 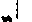 Modify", 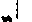 Create" und 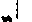 Hold" vorgesehen werden, um entsprechende Planungen durchführen zu können.

Eine neue geplante Soll-Konfiguration 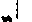 Soll:Plan n" wie durch Überlagern der bestehenden Soll-Konfiguration 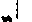 Soll" mit einer Plat-Konfiguration 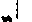 Plan n" erzeugt. Zur Übertagerung werden sämtliche im Informationsmodell enthaltenen Objekte nacheinander angesprochen, wobei zur Abfrage der Befehl 〈get〉 verwendet wird. Bei der Adressierung eines abzufragenden Objektes werden mehrere Werte des Attributs 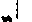 Konfiguration" eines RDN - voneinander durch einen Doppelpunkt getrennt - angegeben, wie z.B. 〈get 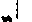 Soll:Plan n"〉. Dadurch werden verschiedene Objektadressen definiert, was bedeutet, dass das Attribut an dieser Stelle einen der angegebenen Werte haben kann. In dem in Fig. 2 dargestellten Fall wird beispielsweise das Objekt NB2 mit der Abfrage 〈get [ [Soll:Plan n] [N] [B] [2]〉 angesprochen, was bedeutet, dass das Objekt mit der Adresse [ [Soll] [N] [B] [2] ] und das Objekt mit der Adresse [ [Plan n] [N] [B] [2] ] angesprochen werden. Die diese Abfrage durchführende Prozedur der Datenbank MIB sucht nun zunächst in der Datenbank MIB nach der in der Abfrage 〈get [ [Soll:Plan n] [N] [B] [2] ] 〉 enthaltenen letzten Objektadresse, in diesem Fall der zweiten Objektadresse 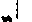 [Plan n] [N] [B] [2]", und stellt fest, dass in der Plan-Konfiguration 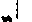 Plan n" ein entsprechend gekennzeichnetes Objekt existiert. Durch den Wert 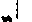 Remove" des Attributs 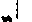 Intention" kann das Betriebssystem OS feststellen, dass dieses Objekt zu eliminieren ist, was beim Auswerten und Anzeigen des Ergebnisses der Überlagerung entsprechend berücksichtigt wird. In der Anzeige wird dieses Objekt dann in einer bestimmten anderen Farbe oder sonstwie als 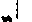 eliminiert" gekennzeichnet.

Bei der Abfrage des Objektes NA1 mit 〈get [ [Soll:Plan n] [N] [A] [1] 1 〉 wird hingegen keine korrespondierende Objektadresse [ [Plan] [N] [A] [1] gefunden. Deshalb sucht die Abfrageprozedur in der Soll-Konfiguration 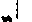 Soll" nach der zweitletzten in der Abfrage formulierten Objektadresse, in diesem Fall der ersten Objektadresse mit dem Attribut 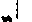 Soll". Sie findet diese in [ [Soll] [N] [A] [1] ] und erklärt diese Adresse demzufolge als gültig. Die Abfrageprozedur sucht also aufgrund der Abfrage (wie z.B. 〈get [ [Soll:Plan n] [N] [A] [1] ] 〉) aufeinanderfolgend von 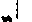 rechts nach links" in den betreffenden Konfigurationen (Plan- bzw. Soll-Konfiguration) nach einer gültigen Objektadresse, d.h. nach einer Adresse, zu der in den Konfigurationen tatsächlich auch ein Objekt existiert. Wenn dabei keine gültige Adresse gefunden wird, erfolgt über das Betriebssystem OS eine entsprechende Rückmeldung zum Bedienteil OP gemäss CCITT X.711ff. In gleicher Weise wird mit allen Objekten (NA, NA1 ... , NB, NB1 ... ) des Objektbaums verfahren.

Somit entsteht durch die Überlagerung der Soll-Konfiguration 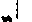 Soll" (Fig.2a) mit der Plan-Konfiguration 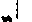 Plan n" (Fig.2b) in der beschriebenen Weise die folgende geplante Soll-Konfiguration 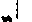 Soll:Plan n": 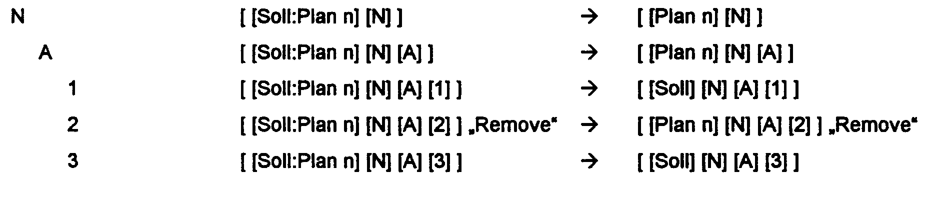 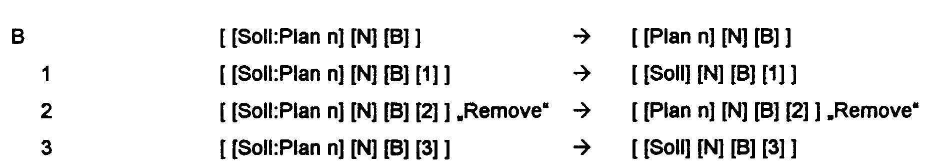 wie sie in Fig.2c auch bildlich dargestellt und in der die Endpunkte der Leitung 2 aufgrund des Intention-Attributs 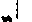 Remove" als eliminiert gekennzeichnet ist. In der Kolonne links ist die Überlagerung, in der Kolonne rechts das dem Betreiber angezeigte Ergebnis der Überlagerung dargestellt.

In dem anhand von Fig. 2 beschriebenen Beispiel wird eine neue geplante Soll-Konfiguration 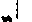 Soll:Plan n" durch Überlagerung der aktuellen Soll-Konfiguration 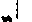 Soll" mit einer einzigen Plan-Konfiguration 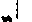 Plan n" erzeugt. Es ist aber auch denkbar, eine neue Soll-Konfiguration 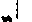 Soll:Plan n" mit mehreren Plan-Konfigurationen 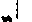 Plan 1", 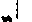 Plan 2", ... " zu erzeugen. Auf diese Weise lässt sich das Netzwerk N schrittweise vorsorglich für bestimmte Zeitpunkte planen, indem die Soll-Konfiguration mit einer ersten Platt-Konfiguration überlagert wird und so jeweils eine neue geplante Soll-Konfiguration entsteht, die ihrerseits in weiteren Schritten nach Bedarf mit einer weiteren Plan-Konfiguration überlagert wird. Die Abfrage zur Überlagerung der Soll-Konfiguration 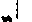 Soll" mit den drei Plan-Konfigurationen 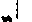 Plan 1", 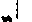 Plan 2" und 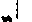 Plan 3" würde formal 〈get [ [Soll:Plan 1:Plan 2:Plan 3] [] [ ] ..... [ ]] 〉 lauten. Die bei diesen Planungen bzw. Planungsversuchen verwendeten Plan-Konfigurationen können in der Datenbank MIB gespeichert und bei Bedarf abgerufen werden, um im gewünschten Betriebszeitpunkt das Netzwerk N wie beschrieben zu konfigurieren. Denkbar ist auch, nicht nur die verwendeten Plan-Konfigurationen, sondern auch die aus den Planungen resultierenden geplanten Soll-Konfigurationen in der Datenbank MIB für eine spätere Verwendung bereitzuhalten.

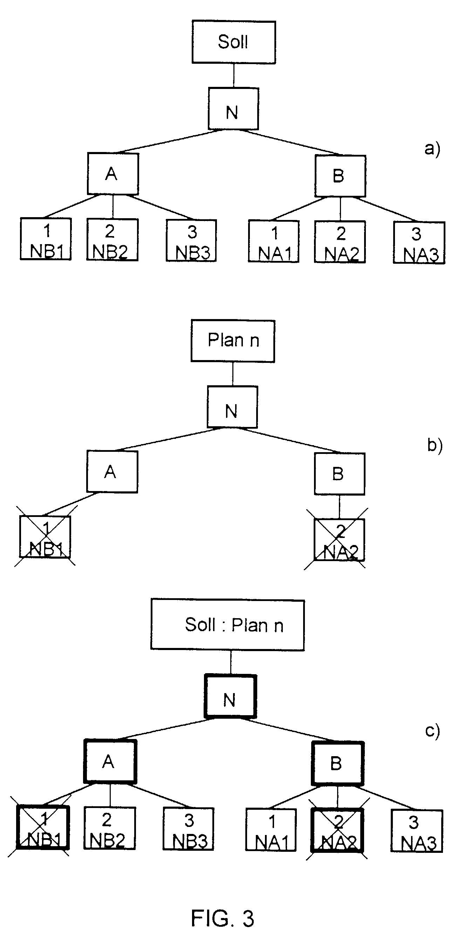

Wie erwähnt, können mit dem beschriebenen Vorgehen zum Überlagern einer Soll-Konfiguration mit einer oder mehreren Plan-Konfiguration auch Fehlplanungen festgestellt werden.Es sei angenommen, bei der Planung gemäss Fig. 2b ist statt des Objektes NB2 fälschlicherweise das Objekt NB1 als zu löschendes Objekt eingetragen worden. Der Objektbaum gemäss Fig. 3b gibt diesen Sachverhalt wieder. Wenn nun diese fehlerhafte Plan-Konfiguration 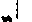 Plan n" in der beschriebenen Weise auf die Soll-Konfiguration (Fig.3a) 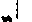 gelegt" wird, resultiert die fehlerhafte Konfiguration 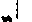 Soll" gemäss Fig.3c. In dieser Konfiguration stellt man fest, dass die Leitung 3 wie gewünscht bestehen bleibt, indem deren Objekte NA3 und NB3 unverändert geblieben sind und richtig referenzieren. Man stellt aber auch fest, dass die Objekte NB2 und NA1 auf die Objekte NA2 bzw. NB1 referenzieren, die als nicht mehr vorhanden gekennzeichnet sind. D.h. statt wie beabsichtigt nur die Leitung 2 zu eliminieren, wurde durch fehlerhafte Planungsdaten zusätzlich noch die Leitung 1 eliminiert. Beim Überlagern der Soll-Konfiguration mit der Platt-Konfiguration wird die Fehlplanung vom Betriebssystem OS mit einem Plausibilitätstest unverzüglich erkannt und dem Betreiber am Bildschirm angezeigt, der dann rechtzeitig vor der Überführung der betreffenden Plan-Konfiguration in das Netzwerk N die nötigen Korrekturen vornehmen kann. Ferner kann das Betriebssystem OS so ausgelegt werden, dar die Implernentierung von Fehlplanungen in das Netzwerk N verhindert wird.

## Patentansprüche

1. Verfahren zum Planen und Konfigurieren eines aus Netzwerkelementen (NE1, NE2, ..., NEk) bestehenden Kommunikationsnetzwerkes (N), dessen Netzwerkelemente (NE1, NE2, ..., NEk) über eine Schnittstelle (QS) konfigurierbar sind, **dadurch gekennzeichnet, dass** eine Datenbank (MIB) vorgesehen ist, in die für verschiedene Betriebszeitpunkte geplante Konfigurationsänderungen enthaltende Plan-Konfigurationen des Netzwerkes (N) eingespeichert werden, mit denen die Betriebsparameter der Netzwerkelemente (NE1, NE2, ..., NEk) entsprechend der Planung einstellbar sind, dass für jede Plan-Konfiguration die Netzwerkelemente (NE1, NE2, ..., NEk) als Objekte mit den einzustellenden Betriebsparametern in einem Objektbaum erfasst werden, dessen Daten im gewünschten Betriebe zeitpunkt aus der Datenbank (MIB) abgerufen und über die Schnittstelle (QS) dem Kommunikationsnetzwerk (N) zugeführt werden, so dass für diesen Betriebszeitpunkt im Kommunikationsnetzwerk (N) eine Soll-Konfiguration eingestellt wird, die der gewünschten Plan-Konfiguration entspricht.

2. Verfahren nach Anspruch 1, **dadurch gekennzeichnet,** dass in der Datenbank (MIB) die dem tatsächlichen Zustand der Netzwerkelernente (NE) des Netzwerkes (N) entsprechende Soll-Konfiguration (Soll) als Objektbaum gespeichert ist, welche Soll-Konfiguration (Soll) jeweils nach der Überführung einer neuen Plan-Konfiguration (Plan n) in das Kommunikationsnetzwerk (N) entsprechend aktualisiert wird.

3. Verfahren nach Anspruch 2, **dadurch gekennzeichnet,** dass eine für einen künftigen Einsatz geplante Soll-Konfiguration (Soll:Plan n) durch Überlagerung der aktuellen Soll-Konfiguration (Soll) mit einer oder mehreren Plan-Konfigurationen (Plan n) gebildet und das Ergebnis der Überlagerung sichtbar gemacht wird.

4. Verfahren nach Anspruch 3, **dadurch gekennzeichnet,** dass die Adresse der Objekte der zu überlagernden Konfigurationen (Soll; Plan n) eine Identifikation enthält, die darauf hinweist, zu welcher Konfigurationsart (Soll bzw. Plan n) das Objekt gehört.

5. Verfahren nach Anspruch 4, **dadurch gekennzeichnet,** dass im Distinguished Name der Objektadressierung ein Relative Distinguished Name mit einem die Konfigurationsart kennzeichnenden Attributwert eingeführt wird.

6. Verfahren nach Anspruch 4 oder 5, **dadurch gekennzeichnet,** dass die Überlagerung einer Soll-Konfiguration (Soll) mit einer Plan-Konfiguration (Plan n) mit einer Abfrage 〈get 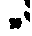 Soll:Plan n"〉 erfolgt und dabei übereinstimmende Objektadressen gesucht wenden, wobei die Suche jeweils in der letzten Objektadresse beginnt und bei fehlender Übereinstimmung auf die vorhergehenden Objektadressen ausgedehnt wird, bis eine Übereinstimmung gefunden wird.

7. Verfahren nach einem der vorhergehenden Ansprüche, **dadurch gekennzeichnet,** dass jede durch eine Überlagerung entstandene geplante Soll-Konfiguration (Soll:Plan n) vor der Überführung in das Kommunikationsnetzwerk (N) einem Plausibilitätstest unterzogen wird.

8. Verfahren nach Anspruch 7, d**adurch gekennzeichnet,** dass wenn der Plausibilitätstest einen Fehler ergibt, die Überführung der betreffenden Plan-Konfiguration in das Netzwerk (N) verhindert wird und die betroffenen Objekte angezeigt werden

9. Anordnung zur Durchführung des Verfahrens nach Anspruch 1, **dadurch gekennzeichnet,** dass eine Datenbank (MIB) vorgesehen ist, in der die Daten verschiedener Konfigurationen (SOLL; PLAN) des Netzwerkes (N) gespeichert sind, dass ein Betriebssystem (OS) zum Ein-und Auslesen der in der Datenbank (MIB) gespeicherten Daten, zum Überlagern einer Soll-Konfiguration mit einer oder mehreren Plan-Konfigurationen sowie zum Überführen der Daten in das Netzwerk (N) vorgesehen ist, und dass ein Bediente (OP) vorgesehen ist, über das dem Betriebssystem (OS) Befehle und Daten zuführbar sind.
